Europäisches Patentamt

European Patent Office

Office européen des brevets

(11) Publication number: 0 369 154
A2

# EUROPEAN PATENT APPLICATION

(21) Application number: 89118492.1

(22) Date of filing: 05.10.89

(51) Int. Cl.⁵: B23Q 11/10, F16L 27/08

(30) Priority: 14.11.88 US 270173

(43) Date of publication of application:
23.05.90 Bulletin 90/21

(84) Designated Contracting States:
DE FR GB IT

(71) Applicant: GTE VALENITE CORPORATION
100 W. 10th Street
Wilmington Delaware(US)

(72) Inventor: Baker, Brian
3618 Hi-Villa Drive
Lake Orion, MI 48035(US)
Inventor: Shaw, Jerry L.
5795 Rowley Drive
Drayton Plains, MI 48020(US)

(74) Representative: Patentanwälte Grünecker,
Kinkeldey, Stockmair & Partner
Maximilianstrasse 58
D-8000 München 22(DE)

(54) Coolant inducing adapter.

(57) Adapter for tool with internal coolant passage equipped with nonrotating annular gland mounted on grooved cylindrical adapter body having seals on either side of the groove and an additional backup seal in the tool holder cavity.

FIG.1

# COOLANT INDUCING ADAPTER

## BACKGROUND OF THE INVENTION

Coolant inducers are known in the art for delivering coolant to the point and/or periphery of a tool. Three means are commonly used: 1) through the spindle of a machine into a coolant hole provided in the tool; 2) through a gland aperture containing bearings and seals from an external source; and 3) directed nozzles fixtured to a machine at the point or periphery of a tool.

The present invention relates to the second type utilizing a rotary coolant inducing gland. One typical prior art type available from Kennametal Milling Company is an "Erikson end mill rotary coolant" adapter providing through-the-tool cooling flow on automatic tool change machines. It extends the overhang of the tool point to a substantial degree which may limit the application other than for plunging type tools since transverse motion tools such as end mills tend to produce deflection resulting in chattering vibration.

Prior art U.S. Patent 4,669,933 teaches different type of gland method utilizing a rotating collar distribution of coolant through holes attempting to direct coolant flow to the periphery of the tool; however, as rotational speed increases, centrifugal forces may divert coolant away from the tool periphery.

## BRIEF DESCRIPTION OF THE PRESENT INVENTION

A rotary gland previously developed for direct mounting on a drill as a coolant inducer has been applied as disclosed herein to a tool adapter for tools having internal coolant passages. The gland is relatively narrow in width with effective seals which provide constant contact and seal even with high rotational speed exceeding 2500 r.p.m. Additional backup seal for high pressure high r.p.m. application provides for registration with an inserted tool to assure absence of leakage along the tool shank where no relative rotation occurs which could produce seal wear.

## BRIEF DESCRIPTION OF THE DRAWINGS

Fig. 1 is a side elevation of the present rotary adapter with rotary gland assembled thereon;

Fig. 2 is an exploded view of the rotary gland components;

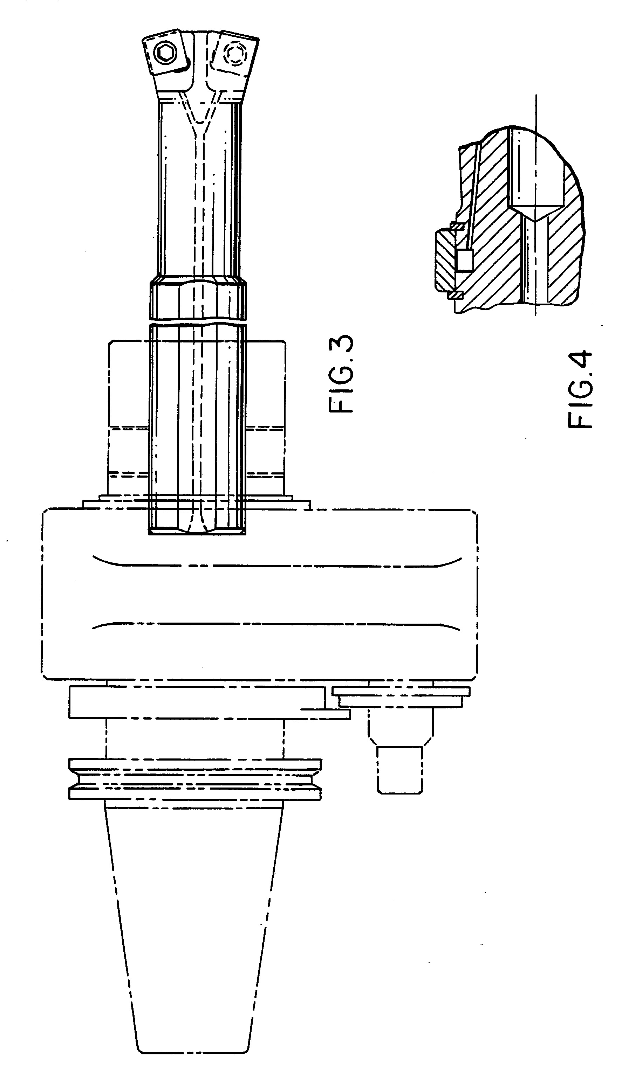

Fig. 3 is an assembly layout of a prior art rotary inducing gland;

Fig. 4 is a sectional side elevation of another prior art construction.

## DETAILED DESCRIPTION OF PREFERRED EMBODIMENT

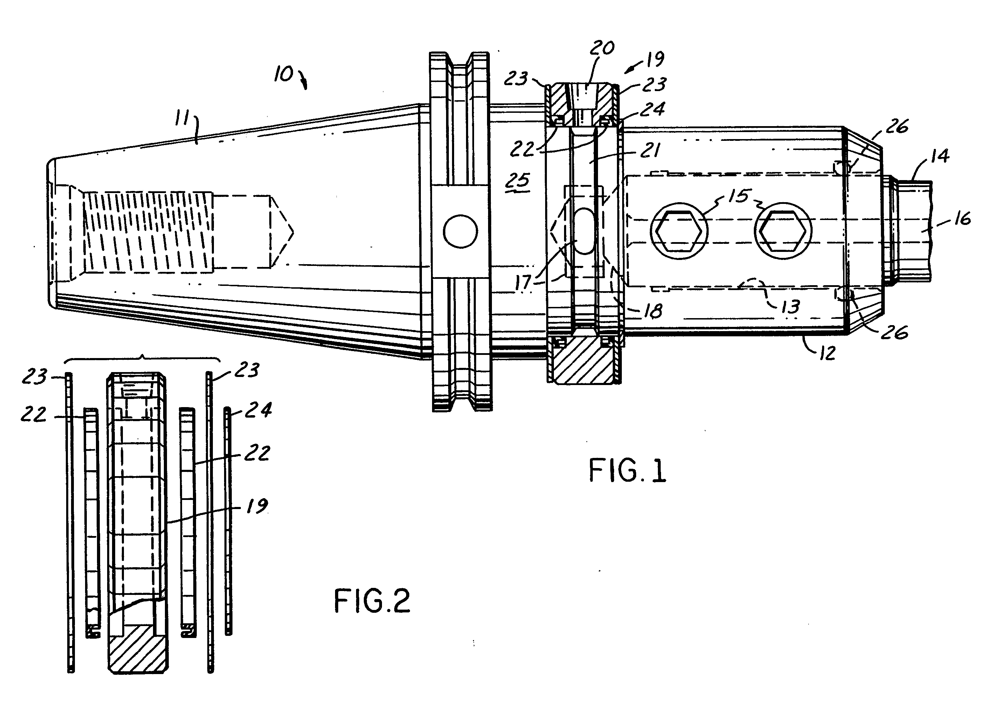

With reference to Figs. 1 and 2, adapter body 10 is provided with tapered shank 11 and tool holder extension 12 having cylindrical cavity 13 for receiving rotary tool 14 retained by pair of clamp screws 15. Coolant passage 16 in tool 14 communicates with transverse passage 17 and connecting passage 18. Transverse passage 17 is supplied with liquid coolant from nonrotating gland 19 through inlet 20 and annular groove 21 leading to transverse passage 17. A pair of lip seals 22 on either side of groove 21 are retained by shims 23 and Spirolox ring 24 relative to adapter shoulder 25. Additional backup "O" ring seal 26 is provided for high pressure retention in high r.p.m. applications assuring a leakproof coolant adapter.

The relatively narrow collar provides a comfort enclosure which permits the use of plunging tools, and especially traversing tools, without excessive overhang and, inherent related limiting factors.

## Claims

1. In combination, rotatable adapter for tool having internal coolant passage, and nonrotating coolant inducing gland means, comprising adapter body with axial cylindrical tool cavity, cylindrical external adapter body surface with annular groove, coolant transmitting passage means extending between said groove and inner end of said tool cavity, said gland means including an annular ring extending over said groove and cylindrical areas of said body on either side of said groove, an inlet into said ring communicating with said groove, seal pockets in said ring overlying said cylindrical areas with seal means installed therein, retaining means for said seal means in registration with the ends of said annular ring, and additional back-up seal means in the wall of said tool cavity for registration with a close fitting cylindrical tool shank.

2. The combination of claim 1 wherein said first seal means includes lip seals in rotational engagement with said cylindrical areas.

3. The combination of claim 2 wherein said retaining means includes a ring shim having internal cylindrical area clearance, a retention groove in a cylindrical area adjacent said shim ring, and a retention ring engaging said retention groove.

4. The combination of claim 3 wherein said retaining means includes a shoulder in the body of said adapter.

5. The combination of claim 3 wherein said retaining means includes a shoulder in the body of said adapter and a shim ring interposed in said shoulder and adjacent end of said annular ring.

6. The combination of claim 3 wherein said additional seal means comprises an "O" ring in an annular groove formed in the cavity wall of said adapter.

7. The combination of claim 1 including an adapter for a transverse tool with a cylindrical transverse tool cavity.

8. The combination of claim 1 including an adapter for a transverse endmill with a cylindrical transverse endmill cavity

FIG.1

FIG.2

EP 0 369 154 A2

FIG.3

FIG.4

EP 0 369 154 A2